# EUROPEAN PATENT APPLICATION

(11) **EP 4 362 268 A1**
(43) Date of publication of application: **01.05.2024**
(21) Application number: 23155891.7
(22) Date of filing: 09.02.2023
(51) Int. Cl.: H02J 7/00, H02M 3/07, H02M 3/158

(54) **METHOD AND DEVICE FOR CHARGING TERMINAL APPARATUS, TERMINAL APPARATUS AND STORAGE MEDIUM**

(30) Priority: 27.10.2022 CN 202211330104
(71) Applicant: Beijing Xiaomi Mobile Software Co., Ltd., Beijing 100085 (CN)
(72) Inventor: LI, Min, Beijing, 100085 (CN)
(74) Representative: Stöckeler, Ferdinand

(57) **Abstract**

A method for charging a terminal apparatus including a battery and a plurality of charge pumps, includes: controlling a first number of charge pumps to provide a first charging current to the battery; and adding a second number of charge pumps according to the first charging current to collectively provide a second charging current to the battery until a number of the charge pumps supplying power to the battery reaches a total number of the plurality of charge pumps, wherein the second charging current is greater than the first charging current.

## Description

### FIELD

The present invention relates to the field of terminal apparatuses, and more particularly, to a method for charging a terminal apparatus, a device for charging a terminal apparatus, a terminal apparatus, and a storage medium.

### BACKGROUND

At present, the high power fast charging technology for terminal apparatuses is becoming more and more popular. With the application of fast charging in terminal apparatuses, the high power fast charging technology is increasingly favored by users.

In the related art, an assembly with a charging function in a terminal apparatus generally includes at least one charge pump, an external charging device provides a certain input voltage and/or a certain input current to the charge pump, and the charge pump assists a charging chip (e.g., a buck boost charge) in providing a battery with a charging current to charge the battery.

### SUMMARY

The present invention is defined by the appended claims. Preferred embodiments are included as dependent claims.

The present invention aims to solve at least one of the technical problems in the related art to a certain extent.

To this end, the present invention aims to provide a method for charging a terminal apparatus, a device for charging a terminal apparatus, a terminal apparatus, a storage medium, and a computer program product. Since one or more charge pumps are used to control charging of a battery throughout a charging process, an efficiency advantage of the charge pumps is fully utilized, and the charging rate of the terminal apparatus can be fully improved.

In the method for charging the terminal apparatus, the device for charging the terminal apparatus, the terminal apparatus, the storage medium and the computer program product according to the present invention, the first number of charge pumps are controlled to provide the first charging current to the battery; and according to the first charging current, the second number of charge pumps is added to collectively provide the second charging current to the battery, until the number of the charge pumps supplying power to the battery reaches the total number of the plurality of charge pumps, in which the second charging current is greater than the first charging current. Since one or more charge pumps are used to control charging of the battery throughout the charging process, the efficiency advantage of the charge pumps is fully utilized, and the charging rate of the terminal apparatus can be fully improved.

Additional aspects and advantages of the present invention will be given in part in the following description, become apparent in part from the following description, or be learned from the practice of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
FIG. 1 is a flow chart of a method for charging a terminal apparatus according to an embodiment of the present invention;
FIG. 2 is a schematic diagram of an assembly for charging a terminal apparatus according to an embodiment of the present invention;
FIG. 3 is a flow chart of a method for charging a terminal apparatus according to another embodiment of the present invention;
FIG. 4 is a flow chart of a method for charging a terminal apparatus according to another embodiment of the present invention;
FIG. 5 is a flow chart of a method for charging a terminal apparatus according to another embodiment of the present invention;
FIG. 6 is a flow chart of a method for charging a terminal apparatus according to another embodiment of the present invention;
FIG. 7 is a block diagram of a device for charging a terminal apparatus according to an embodiment of the present invention;
FIG. 8 is a block diagram of a device for charging a terminal apparatus according to another embodiment of the present invention;
FIG. 9 is a block diagram of a terminal apparatus according to an embodiment of the present invention;
FIG. 10 is a block diagram of a terminal apparatus according to another embodiment of the present invention;
FIG. 11 is a block diagram of a terminal apparatus according to another embodiment of the present invention.

### DETAILED DESCRIPTION

Embodiments of the present invention are described in detail below, and examples of the embodiments are shown in the accompanying drawings. Same or similar reference numerals from beginning to end indicate same or similar elements or elements having same or similar functions. The following embodiments described with reference to the accompanying drawings are exemplary and are only intended to explain the present invention, rather than limit the present invention. On the contrary, the embodiments of the present invention include any changes, modifications and equivalents falling within the scope of the appended claims

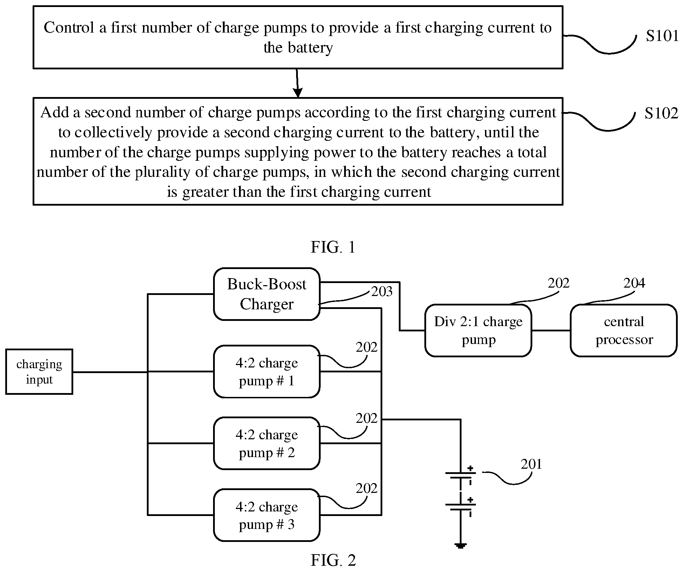

FIG. 1 is a flow chart of a method for charging a terminal apparatus according to an embodiment of the present invention.

This embodiment takes a method for charging a terminal apparatus, which is applied in a charging device of the terminal apparatus, as an example. In this embodiment, the method for charging the terminal apparatus may be configured in the charging device of the terminal apparatus. The charging device of the terminal apparatus may be arranged in a server or may be arranged in the terminal apparatus, which is not limited in the embodiments of the present invention. In the embodiments of the present invention, a charge pump is a charging chip for fast charging.

This embodiment takes a method for charging a terminal apparatus, which is applied in the terminal apparatus, as an example. The terminal apparatus may be, for example, a smart phone, a tablet computer, a personal digital assistant, an e-book and other hardware equipment with various operating systems.

The methods may be performed by, for example, a central processing unit (CPU) in the server or the terminal apparatus in terms of hardware, and may be, for example, a relevant background service in the server or the terminal apparatus in terms of software, which is not limited in the present invention.

As shown in FIG. 1, the method for charging the terminal apparatus includes the following steps.

In S101, a first number of charge pumps are controlled to provide a first charging current to a battery.

FIG. 2 is a schematic diagram of an assembly for charging the terminal apparatus according to an embodiment of the present invention. The assembly includes: a battery 201, a plurality of charge pumps 202, and a charging chip 203 (e.g., a buck boost charge). The assembly may also include a central processor 204. An external charging device provides a certain input voltage and/or a certain input current to the charge pump 202, and the charge pump 202 assists the charging chip in providing a charging current to the battery 201 to charge the battery 201. There may be two batteries, and three charge pumps with a ratio of 4:2 are adopted based on a double string design of the batteries. The number of charge pumps may be any other possible number, which is not limited in the present invention.

In the embodiments of the present invention, it may be detected whether the charging chip is inserted into the terminal apparatus and whether a power source is coupled for charging. When it is detected that the charging chip has been inserted into the terminal apparatus and the power source is coupled for charging, the first number of charge pumps may be started first and controlled to assist the charging chip in providing the charging current to the battery.

The first number of charge pumps may be a part of the plurality of charge pumps.

For example, when a total number of the plurality of charge pumps is three, one charge pump may be started first to provide the charging current to the battery, which is not limited in the present invention.

In a charging process, the charging current provided to the battery by first starting the first number of charge pumps may be called the first charging current.

In S102, according to the first charging current, a second number of charge pumps is added to collectively provide a second charging current to the battery until a number of charge pumps supplying power to the battery reaches the total number of the plurality of charge pumps, in which the second charging current is greater than the first charging current.

When the first number of charge pumps are controlled to provide the first charging current to battery as described above, a starting time of remaining charge pumps may be determined according to an actual situation of the first charging current. When the remaining charge pumps are started to provide the charging current to the battery, the remaining charge pump may be started based on a preset incremental quantity (for example, starting one by one, i.e., the incremental quantity may be 1, or starting two by two, i.e., the incremental quantity may be 2, which is not limited in the present invention) until all charge pumps are started, which is not limited in the present invention.

In the embodiments of the present invention, a moment at which the number of charge pumps providing the battery with the charging current is increased may be determined according to the first charging current. For example, the moment at which the number of charge pumps providing the battery with the charging current is increased may be determined according to a comparison result between a current value of the first charging current and a threshold value. Alternatively, the moment at which the number of charge pumps providing the battery with the charging current is increased may further be determined according to a duration of charging with the first charging current, which is not limited in the present invention.

In the charging process, when it is determined that the number of charge pumps providing the battery with the charging current may be increased according to the first charging current, the second number of charge pumps may be started to control the first number of charge pumps and the second number of charge pumps to collectively provide the charging current to the battery. Thereupon, the charging current may be called the second charging current.

For example, when the total number of the plurality of charge pumps is three, one charge pump may be started first to provide the first charging current to the battery. Subsequently, when the first charging current is greater than a current threshold value, another charge pump may be started additionally to provide the second charging current to the battery together with the charge pump which is started first, which is not limited in the present invention.

In this embodiment, the first number of charge pumps are controlled to provide the first charging current to the battery, and according to the first charging current, the second number of charge pumps is added to collectively provide the second charging current to the battery, until the number of the charge pumps supplying power to the battery reaches the total number of the plurality of charge pumps, in which the second charging current is greater than the first charging current. Since one or more charge pumps are used to control charging of the battery throughout the charging process, an efficiency advantage of the charge pumps is fully utilized, and the charging rate of the terminal apparatus can be fully improved.

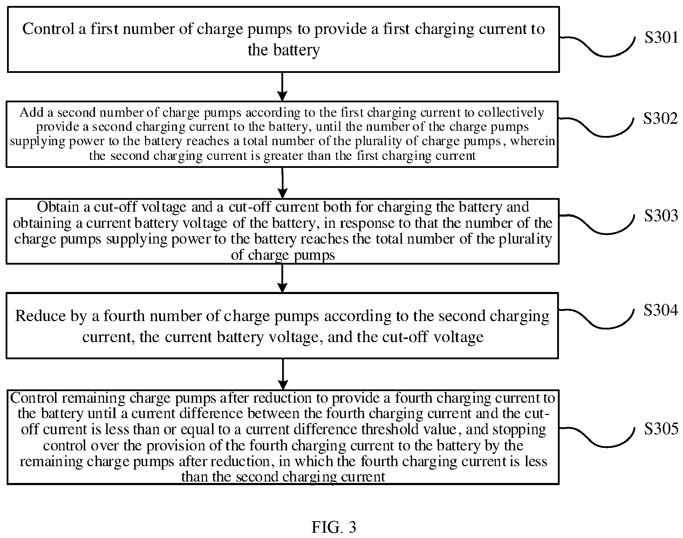

FIG. 3 is a flow chart of a method for charging the terminal apparatus according to another embodiment of the present invention.

As shown in FIG. 3, the method for charging the terminal apparatus includes the following steps.

In S301, the first number of charge pumps are controlled to provide the first charging current to the battery.

In S302, according to the first charging current, the second number of charge pumps is added to collectively provide the second charging current to the battery until the number of the charge pumps supplying power to the battery reaches the total number of the plurality of charge pumps, in which the second charging current is greater than the first charging current.

In S303, when the number of the charge pumps supplying power to the battery reaches the total number of the plurality of charge pumps, a cut-off voltage for charging the battery and a cut-off current for charging the battery are obtained, and a current battery voltage of the battery is obtained.

After the second number of charge pumps is added according to the first charging current to collectively provide the second charging current to the battery as described above, it may be judged whether the number of the charge pumps supplying power to the battery reaches the total number of the plurality of charge pumps (for example, whether the number of the charge pumps reaches three). When the total number is reached, the battery may be charged based on some fast charging algorithms, the cut-off voltage and the cut-off current both for charging the battery may be obtained during the charging process, and the current battery voltage of the battery may be obtained.

The fast charging algorithms may include, for example, a flash fast charge (FFC) algorithm, or any other possible fast charging algorithm, which is not limited in the present invention.

In the embodiments of the present invention, when it is determined that all charge pumps have been started to charge the battery, the cut-off voltage for charging the battery, the cut-off current for charging the battery, and the current battery voltage of the battery may further be obtained. The cut-off voltage, the cut-off current and the current battery voltage of the battery are configured to control the charging of the battery.

In S304, the number of charge pumps is reduced by a fourth number of charge pumps according to the second charging current, the current battery voltage, and the cut-off voltage.

In S305, remaining charge pumps after reduction are controlled to provide a fourth charging current to the battery until a current difference between the fourth charging current and the cut-off current is less than or equal to a current difference threshold value; and the control over the provision of the fourth charging current to the battery by the remaining charge pumps after reduction is stopped, in which the fourth charging current is less than the second charging current.

When the number of the charge pumps supplying power to the battery reaches the total number of the plurality of charge pumps, the cut-off voltage for charging the battery, the cut-off current for charging the battery, and the current battery voltage are obtained. Subsequently, a moment at which the charge pump is turned off to stop charging the battery may be determined according to the second charging current, the current battery voltage and the cut-off voltage.

The fourth number of charge pumps may be a part of the plurality of charge pumps. That is, the number of charge pumps may be reduced by the fourth number according to the second charging current, the current battery voltage and the cut-off voltage.

For example, when the total number of the plurality of charge pumps is three, one (i.e., the first number) charge pump may be started first to provide the charging current to the battery, and subsequently two (i.e., the second number) charge pumps may be started additionally to provide the charging current to the battery, i.e., three charge pumps may be started in totally to provide the charging current (i.e., the second charging current) to the battery. Subsequently, a control strategy of subsequent charge pumps may be determined according to the second charging current, the cut-off voltage and the current battery voltage of the battery. For example, when a part of the charge pumps are turned off by decreasing the quantity step by step (for example, turning off one by one, i.e., the decreasing quantity may be 1, or turning off two by two, i.e., the decreasing quantity may be 2, which is not limited in the present invention), the part of the charge pumps to be turned off (for example, one, the number of the part of the charge pumps to be turned off is the fourth number) are determined according to the second charging current, the cut-off voltage and the current battery voltage of the battery. As a result, the remaining charge pumps after reducing by the fourth number of charge pumps are the charge pumps that keep providing power to the battery. Subsequently, the remaining charge pumps after reduction may be controlled to provide the fourth charging current to the battery, until the current difference between the fourth charging current and the cut-off current is less than or equal to the current difference threshold value. The control over the provision of the fourth charging current to the battery by the remaining charge pumps after reduction is stopped (i.e., the remaining charge pumps are turned off), which is not limited in the present invention.

The charging current provided to the battery by the remaining charge pumps after reducing by the fourth number of charge pumps in the charging process may be called the fourth charging current.

The current battery voltage of the battery refers to a voltage between a positive pole and a negative pole of a current during the charging process. When two batteries coupled in series are adopt, the current battery voltage refers to a voltage between a positive pole and a negative pole of the two batteries coupled in series.

In some embodiments of the present invention, when performing the step S305, the voltage difference between the cut-off voltage and the current battery voltage may further be determined, and the number of charge pumps is reduced by the fourth number according to the second charging current and the voltage difference, such that the moment at which the number of charge pumps is reduced by the fourth number is accurately determined, to provide the charging current to the battery based on the remaining charge pumps.

In some embodiments of the present invention, when the number of charge pumps is reduced by the fourth number according to the second charging current and the voltage difference, the second charging current may be regulated to obtain a fifth charging current in response to the voltage difference between the cut-off voltage and the current battery voltage being greater than or equal to the voltage difference threshold value. The fifth charging current is less than the second charging current. Subsequently, the moment at which the number of charge pumps is reduced by the fourth number is determined according to the fifth charging current. When the voltage difference is less than the voltage difference threshold value, the current battery voltage of the battery is updated, and the voltage difference is updated according to an updated current battery voltage until an updated voltage difference is greater than or equal to the voltage difference threshold value, thus effectively avoiding overcharging of the battery and guaranteeing the charging safety.

In some embodiments of the present invention, when the moment at which the number of charge pumps is reduced by the fourth number is determined according to the fifth charging current, the number of charge pumps may be reduced by the fourth number in response to the fifth charging current being less than or equal to a third current threshold value, and the fifth charging current is regulated in response to the fifth charging current being greater than the third current threshold value, until the regulated fifth charging current is less than or equal to the third current threshold value, thus guaranteeing the accuracy of the moment determination, avoiding overcharging of the battery, and improving the charging safety.

In the embodiments of the present invention, in order to effectively avoid an excessive voltage during the charging process of the battery, improve the safety of the charging control, and avoid battery loss, the current battery voltage and the cut-off voltage may be compared. For example, a redundancy may be set between the current battery voltage and the cut-off voltage, and used as the voltage difference threshold value (such as 20mV (millivolt)). When the voltage difference of the cut-off voltage and the current battery voltage is greater than or equal to the voltage difference threshold value (such as 20mV (millivolt)), it indicates that the battery may be about to finish charging, and at this time, a control logic configured to turn off a part of the charge pumps may be triggered.

In the embodiments of the present invention, in the control logic configured to turn off a part of the charge pumps, the second charging current may be regulated first to obtain the fifth charging current, in which the fifth charging current is less than the second charging current. Subsequently, the regulated fifth charging current is compared with a current threshold value (which may be called the third current threshold value, and the third current threshold value may take a current value from 3A to 5A (ampere). In the embodiments of the present invention, the third current threshold value may be 5A). When the fifth charging current is less than 5A, a part of the charge pumps (for example, one is turned off, i.e., the fourth number) may be turned off. At the same time, the remaining charge pumps after reduction are controlled to provide the fourth charging current to the battery until the current difference between the fourth charging current and the cut-off current is less than or equal to the current difference threshold value (for example, 50mA (milliampere)), indicating that the charging is completed. At this time, the control over the provision of the fourth charging current to the battery by the remaining charge pumps after reduction may be stopped, which is not limited in the present invention.

In the embodiments of the present invention, when the fifth charging current is greater than or equal to 5A, the fifth charging current may be continuously regulated until the regulated fifth charging current is less than or equal to the third current threshold value, such that the charging safety can be effectively guaranteed, the battery loss can be avoided, and the battery life can be improved while the charging rate of the terminal apparatus can be fully improved.

In this embodiment, the first number of charge pumps are controlled to provide the first charging current to the battery, and according to the first charging current, the second number of charge pumps is added to collectively provide the second charging current to the battery, until the number of the charge pumps supplying power to the battery reaches the total number of the plurality of charge pumps, in which the second charging current is greater than the first charging current. Since one or more charge pumps are used to control charging of the battery throughout the charging process, the efficiency advantage of the charge pumps is fully utilized, and the charging rate of the terminal apparatus can be fully improved. When the number of the charge pumps supplying power to the battery reaches the total number of the plurality of charge pumps, the cut-off voltage and the cut-off current both for charging the battery are obtained, and the current battery voltage of the battery is obtained. The number of charge pumps is reduced by the fourth number according to the second charging current, the current battery voltage and the cut-off voltage. The remaining charge pumps after reduction are controlled to provide the fourth charging current to the battery until the current difference between the fourth charging current and the cut-off current is less than or equal to the current difference threshold value. The control over the provision of the fourth charging current to the battery by the remaining charge pumps after reduction is stopped. The fourth charging current is less than the second charging current. Therefore, the charging safety can be effectively guaranteed, the battery loss can be avoided, and the battery life can be improved while the charging rate of the terminal apparatus can be fully improved.

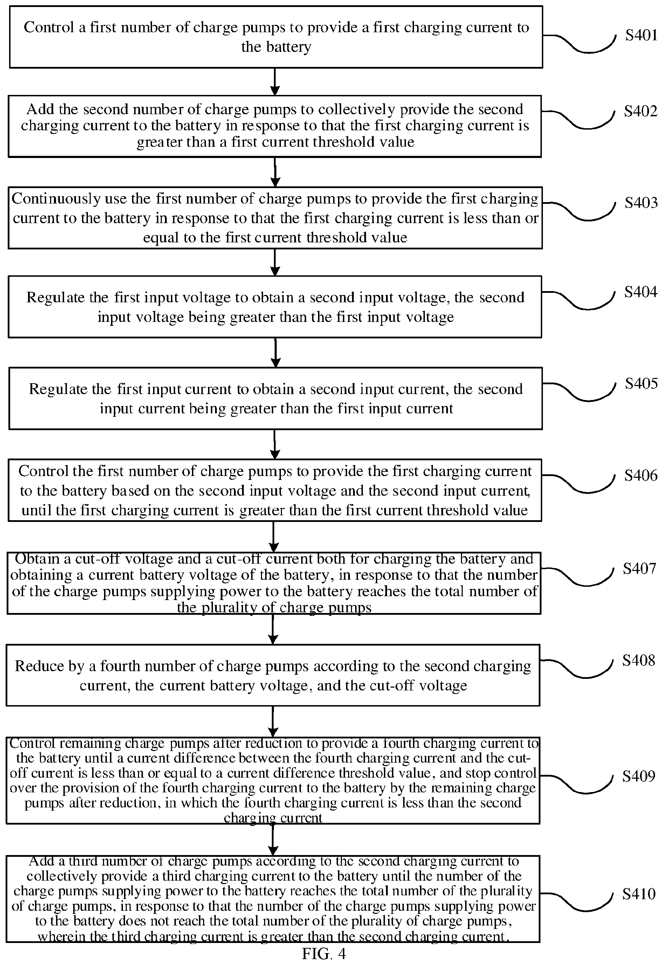

FIG. 4 is a flow chart of a method for charging the terminal apparatus according to another embodiment of the present invention.

In this embodiment, a starting mode of the plurality of charge pumps is described. A turning-off mode of the plurality of charge pumps is described in the above embodiments. When the first number of charge pumps are started, the first number of charge pumps provide the first charging current to the battery based on a first input voltage and a first input current provided by the external charging device, which is not limited in the present invention.

As shown in FIG. 4, the method for charging the terminal apparatus includes the following steps.

In S401, the first number of charge pumps are controlled to provide the first charging current to the battery.

In S402, the second number of charge pumps is added when the first charging current is greater than a first current threshold value, to collectively provide the second charging current to the battery, in which the second charging current is greater than the first charging current.

In the embodiments of the present invention, when the second number of charge pumps is added to collectively provide the second charging current to the battery according to the first charging current, the moment at which the number of charge pumps providing the battery with the charging current is increased may be determined according to a comparison result between a current value of the first charging current and a threshold value. The threshold value may be called the first current threshold value.

The first current threshold value may be related to a minimum current that allows the charge pump to work. For example, the first current threshold value may be any current in the range of 2A to 3A. The first current threshold value in the present invention may be 3A.

For example, when the first charging current provided by the first number of charge pumps to the battery is greater than 3A, the number of charge pumps providing the battery with the charging current may be increased. For example, the second number of charge pumps is added to collectively provide the second charging current to the battery, until the number of the charge pumps supplying power to the battery reaches the total number of the plurality of charge pumps.

In S403, the first number of charge pumps are continuously used to provide the first charging current to the battery when the first charging current is less than or equal to the first current threshold value.

In S404, the first input voltage is regulated to obtain a second input voltage, in which the second input voltage is greater than the first input voltage.

In S405, the first input current is regulated to obtain a second input current, in which the second input current is greater than the first input current.

In S406, the first number of charge pumps are controlled to provide the first charging current to the battery based on the second input voltage and the second input current until the first charging current is greater than the first current threshold value.

That is, when the first charging current is less than or equal to the first current threshold value, the first number of charge pumps may be continuously used to provide the first charging current to the battery. At this time, it indicates that there is still much space for improving the charging rate. Subsequently, the first input voltage may be regulated accordingly to obtain the second input voltage, in which the second input voltage is greater than the first input voltage. Moreover, the first input current may be regulated to obtain a second input current, in which the second input current is greater than the first input current. In addition, the first number of charge pumps are controlled to provide the first charging current to the battery based on the second input voltage and the second input current until the first charging current is greater than the first current threshold value.

A request for a voltage and current regulation may be made to the external charging device. For example, a request for a voltage increment of 200mV and a current increment of 300mA may be made at a time, such that the first input voltage is increased by a corresponding voltage value based on the voltage increment of 200mV to obtain the second input voltage. Accordingly, the first input current is increased by a corresponding current value based on the current increment of 300mA to obtain the second input current. After the voltage and current regulation, the first number of charge pumps are controlled to provide the first charging current to the battery based on the second input voltage and the second input current, such that the first charging current reaches the first current threshold value as soon as possible, to increase the number of the charge pumps providing the battery with the charging current.

Therefore, when the first charging current is greater than the first current threshold value, the second number of charge pumps is added to collectively provide the second charging current to the battery, such that a moment at which the number of charge pumps providing the battery with the charging current is increased may be determined promptly, and the utilization rate of the charge pump is improved promptly. When the first charging current is less than or equal to the first current threshold value, the first number of charge pumps are continuously used to provide the first charging current to the battery, and the request for the voltage and current regulation may be made to the external charging device promptly, such that the first charging current reaches the first current threshold value as soon as possible, the prompt control over the starting of the plurality of charge pumps may realized, and the efficiency advantage of the charge pump is fully utilized to a maximum extent throughout the charging process.

In S407, when the number of the charge pumps supplying power to the battery reaches the total number of the plurality of charge pumps, the cut-off voltage and the cut-off current both for charging the battery are obtained, and the current battery voltage of the battery is obtained.

In S408, the number of charge pumps is reduced by the fourth number according to the second charging current, the current battery voltage and the cut-off voltage.

In S409, the remaining charge pumps after reduction are controlled to provide the fourth charging current to the battery until the current difference between the fourth charging current and the cut-off current is less than or equal to the current difference threshold value; and the control over the provision of the fourth charging current to the battery by the remaining charge pumps after reduction is stopped, in which the fourth charging current is less than the second charging current.

S407-S409 are described in the above embodiments, which will not be repeated here.

In S410, when the number of the charge pumps supplying power to the battery does not reach the total number of the plurality of charge pumps, a third number of charge pumps is added according to the second charging current to collectively provide a third charging current to the battery until the number of the charge pumps supplying power to the battery reaches the total number of the plurality of charge pumps, in which the third charging current is greater than the second charging current.

In order to effectively support the completeness of the charging control and fully guarantee the charging efficiency, in the embodiments of the present invention, when the number of the charge pumps supplying power to the battery does not reach the total number of the plurality of charge pumps, a part of the charge pumps may be started again, and for example, the remaining charge pumps may be started in an incremental quantity. For example, one more charge pump is started additionally on the basis of two charge pumps, to realize the charging of the battery based on three charge pumps, and the number of the charge pumps that are started again may be called the third number. More charge pumps are started until the number of the charge pumps supplying power to the battery reaches the total number of the plurality of charge pumps. It can be understood that the first quantity, the second quantity and the third quantity may be identical or different.

In the embodiments of the present invention, the method in which the third number of charge pumps is added according to the second charging current to collectively provide the third charging current to the battery may be a method corresponding to the method in which "the second number of charge pumps is added according to the first charging current to collectively provide the second charging current to the battery", as described above. For example, the second charging current is compared with a current threshold value (which may be called a second current threshold value). When the second charging current is greater than the second current threshold value, the third number of charge pumps is added to collectively provide the third charging current to the battery. When the second charging current is less than or equal to the second current threshold value, the first number of charge pumps and the second number of charge pumps are continuously used to collectively provide the second charging current to the battery. Therefore, the moment at which the number of charge pumps providing the battery with the charging current is increased may be determined rapidly and promptly.

In addition, when the second charging current is less than or equal to the second current threshold value, the first number of charge pumps and the second number of charge pumps is continuously used to collectively provide the second charging current to the battery, and the request for the voltage and current regulation may further be made to the external charging device synchronously. For example, a request for a voltage increment of 200mV and a current increment of 300mA may be made at a time, such that the second input voltage is increased by a corresponding voltage value based on the voltage increment of 200mV to obtain the second input voltage. Accordingly, the second input current is increased by a corresponding current value based on the current increment of 300mA to obtain the second input current. After the voltage and current regulation, the second number of charge pumps are controlled to provide the second charging current to the battery based on a new input voltage and a new input current, such that the second charging current reaches the second current threshold value as soon as possible, to increase the number of charge pumps providing the battery with the charging current.

In this embodiment, since one or more charge pumps are used to control charging of the battery throughout the charging process, the efficiency advantage of the charge pumps is fully utilized, and the charging rate of the terminal apparatus can be fully improved. When the first charging current is greater than the first current threshold value, the second number of charge pumps is added to collectively provide the second charging current to the battery, such that the moment at which the number of charge pumps providing the battery with the charging current is increased may be determined promptly, and the utilization rate of the charge pump is improved promptly. When the first charging current is less than or equal to the first current threshold value, the first number of charge pumps are continuously used to provide the first charging current to the battery, and the request for the voltage and current regulation may be made to the external charging device promptly, such that the first charging current reaches the first current threshold value as soon as possible, the prompt control over the starting of the plurality of charge pumps may be realized, and the efficiency advantage of the charge pump is fully utilized to a maximum extent throughout the charging process. When the number of the charge pumps supplying power to the battery does not reach the total number of the plurality of charge pumps, the third number of charge pumps is added according to the second charging current to collectively provide the third charging current to the battery until the number of the charge pumps supplying power to the battery reaches the total number of the plurality of charge pumps, which effectively supports the completeness of the charging control and fully guarantees the charging efficiency.

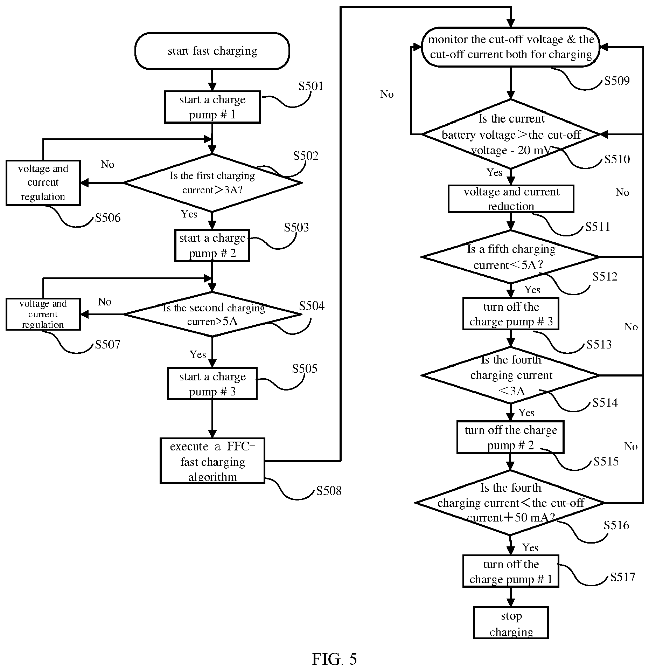

An application example of the method for charging the terminal apparatus according to the embodiments of the present invention is illustrated in FIG. 5. FIG. 5 is a flow chart of a method for charging a terminal apparatus according to another embodiment of the present invention, in which the number of charge pumps included in the terminal apparatus is identical to the number of the charge pumps shown in FIG. 2 above. One charge pump (#1) may be started to charge the battery (S501) when starting a fast charging, and the first charging current configured to charge the battery through the charge pump (#1) is detected in response to the charge pump (#1) starting to charge the battery. When the first charging current is greater than the first current threshold value (3A) (S502), another charge pump (#2) may be started additionally (S503) to collectively charge the battery together with the charge pump (#1), and the second charging current configured to charge to the battery through the charge pump (#2) and the charge pump (#1) are detected in response to the charge pump (#2) and the charge pump (#1) starting to charge the battery. When the second charging current is greater than the second current threshold value (5A) (S504), another charge pump (#3) may be started additionally (S505) to charge the battery, and the charge pump (#1), the charge pump (#2), and the charge pump (#3) collectively charge the battery. When the first charging current is less than or equal to the first current threshold value (3A), the voltage and current regulation may be applied (S506). When the second charging current is less than or equal to the second current threshold value (5A), the voltage and current regulation may also be applied (S507). When it is confirmed that all the charge pumps have been started, a fast charging algorithm, e.g., the FFC-fast charging algorithm in the related art may be executed (S508). Subsequently, the cut-off voltage and the cut-off current both for charging the battery and the current battery voltage of the battery are monitored (S509). When the voltage difference between the cut-off voltage and the current battery voltage is greater than or equal to the voltage difference threshold value (S510), the second charging current is regulated (for example, reduced by 200mA) to obtain the fifth charging current (i.e., the charging current after reduction) (S511). Subsequently, it is judged whether the fifth charging current is less than 5A (S512). When the fifth charging current is less than 5A, one charge pump (#3) is turned off (S513), and the fourth charging current configured to charge the battery based on the charge pump (#1) and the charge pump (#2) is continuously detected. When the fourth charging current is less than 3A (S514), the charge pump (#2) is further turned off (S515). Subsequently, the charging current configured to charge the battery based on the charge pump (#1) is detected, and the detected charging current is used to update the fourth charging current until the current difference between a new fourth charging current and the cut-off current is less than or equal to the current difference threshold value (50mA) (S516). The currently started charge pump is turned off (i.e., the charge pump (#1) is turned off) (S517) to complete the entire charging process.

It should be noted that the description about terms, methods and steps in the following embodiments, identical to or corresponding to those in the above embodiments, may refer to the above embodiments and will not be repeated here.

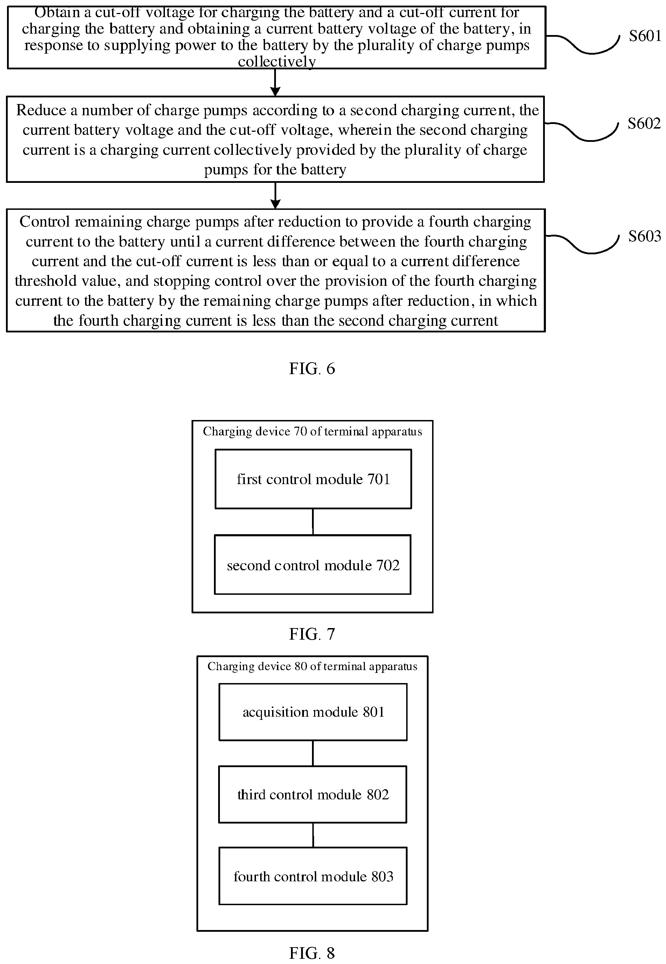

FIG. 6 is a flow chart of a method for charging a terminal apparatus according to another embodiment of the present invention.

The terminal apparatus includes a battery and a plurality of charge pumps.

As shown in FIG. 6, the method for charging the terminal apparatus includes the following steps.

In S601, a cut-off voltage for charging the battery and a cut-off current for charging the battery are obtained and a current battery voltage of the battery is obtained, when the plurality of charge pumps collectively supply power to the battery.

In S602, the number of charge pumps is reduced by a fourth number according to a second charging current, the current battery voltage and the cut-off voltage, in which the second charging current is a charging current collectively provided by the plurality of charge pumps for the battery.

In S603, remaining charge pumps after reduction are controlled to provide a fourth charging current to the battery until a current difference between the fourth charging current and the cut-off current is less than or equal to a current difference threshold value; and control over the provision of the fourth charging current to the battery by the remaining charge pumps after reduction is stopped, in which the fourth charging current is less than the second charging current.

In some embodiments of the present invention, reducing by the fourth number the number of charge pumps according to the second charging current, the current battery voltage and the cut-off voltage includes: determining a voltage difference between the cut-off voltage and the current battery voltage; and reducing by the fourth number the number of charge pumps according to the second charging current and the voltage difference.

In some embodiments of the present invention, reducing by the fourth number the number of charge pumps according to the second charging current and the voltage difference includes: regulating the second charging current to obtain a fifth charging current and reducing by the fourth number the number of charge pumps according to the fifth charging current, when the voltage difference is greater than or equal to a voltage difference threshold value, in which the fifth charging current is less than the second charging current; and updating the current battery voltage of the battery, and updating the voltage difference according to an updated current battery voltage until an updated voltage difference is greater than or equal to the voltage difference threshold value, when the voltage difference is less than the voltage difference threshold value.

In some embodiments of the present invention, reducing by the fourth number the number of charge pumps according to the fifth charging current includes: reducing by the fourth number the number of charge pumps, when the fifth charging current is less than or equal to a third current threshold value; and regulating the fifth charging current until a regulated fifth charging current is less than or equal to the third current threshold value, when the fifth charging current is greater than the third current threshold value.

The details of the above steps are described in the above embodiments and will not be repeated here.

In this embodiment, when the plurality of charge pumps provide the battery with power collectively, the cut-off voltage and the cut-off current both for charging the battery are obtained, and the current battery voltage of the battery is obtained. In addition, the number of charge pumps is reduced by the fourth number according to the second charging current, the current battery voltage and the cut-off voltage. The second charging current is the charging current collectively provided by the plurality of charge pumps for the battery. Moreover, the remaining charge pumps after reduction are controlled to provide the fourth charging current to the battery until the current difference between the fourth charging current and the cut-off current is less than or equal to the current difference threshold value. The control over the provision of the fourth charging current to the battery by the remaining charge pumps after reduction is stopped. The fourth charging current is less than the second charging current. Therefore, the charging rate of the terminal apparatus can be fully improved, the charging safety can be effectively guaranteed, the battery loss can be avoided, and the battery life can be improved.

In some embodiments of the present invention, before obtaining the cut-off voltage and the cut-off current both for charging the battery, the method further includes: controlling the first number of charge pumps to provide the first charging current to the battery; and adding the second number of charge pumps according to the first charging current to collectively provide the second charging current to the battery until the number of the charge pumps supplying power to the battery reaches the total number of the plurality of charge pumps, in which the second charging current is greater than the first charging current. Since one or more charge pumps are used to control charging of the battery throughout the charging process, the efficiency advantage of the charge pumps is fully utilized, and the charging rate of the terminal apparatus can be fully improved.

In some embodiments of the present invention, adding the second number of charge pumps according to the first charging current to collectively provide the second charging current to the battery includes: adding the second number of charge pumps to collectively provide the second charging current to the battery when the first charging current is greater than the first current threshold value; and continuously using the first number of charge pumps to provide the first charging current to the battery when the first charging current is less than or equal to the first current threshold value.

In some embodiments of the present invention, the first number of charge pumps provide the first charging current to the battery based on the first input voltage and the first input current provided by the external charging device. After continuously using the first number of charge pumps to provide the first charging current to the battery, the method further includes: regulating the first input voltage to obtain the second input voltage, the second input voltage being greater than the first input voltage; regulating the first input current to obtain the second input current, the second input current being greater than the first input current; and controlling the first number of charge pumps to provide the first charging current to the battery based on the second input voltage and the second input current until the first charging current is greater than the first current threshold value.

In some embodiments of the present invention, after adding the second number of charge pumps according to the first charging current to collectively provide the second charging current to the battery, the method further includes: adding the third number of charge pumps according to the second charging current to collectively provide the third charging current to the battery until the number of the charge pumps supplying power to the battery reaches the total number of the plurality of charge pumps, when the number of the charge pumps supplying power to the battery does not reach the total number of the plurality of charge pumps, in which the third charging current is greater than the second charging current.

In some embodiments of the present invention, adding the third number of charge pumps according to the second charging current to collectively provide the third charging current to the battery includes: adding the third number of charge pumps to collectively provide the third charging current to the battery when the second charging current is greater than the second current threshold value; and continuously using the first number of charge pumps and the second number of charge pumps to collectively provide the second charging current to the battery when the second charging current is less than or equal to the second current threshold value.

The specific description of the above steps may refer to the above embodiments and will not be repeated here.

FIG. 7 is a block diagram of a device 70 for charging a terminal apparatus according to an embodiment of the present invention.

The terminal apparatus includes a battery and a plurality of charge pumps.

As shown in FIG. 7, the device 70 for charging the terminal apparatus includes: a first control module 701 configured to control a first number of charge pumps to provide a first charging current to the battery; and a second control module 702 configured to add a second number of charge pumps according to the first charging current to collectively provide a second charging current to the battery until a number of charge pumps supplying power to the battery reaches a total number of the plurality of charge pumps, in which the second charging current is greater than the first charging current.

It should be noted that the foregoing explanation of the method for charging the terminal apparatus is also applicable to the device for charging the terminal apparatus in this embodiment, which will not be repeated here.

In this embodiment, the first number of charge pumps are controlled to provide the first charging current to the battery; and the second number of charge pumps is added according to the first charging current to collectively provide the second charging current to the battery until the number of the charge pumps supplying power to the battery reaches the total number of the plurality of charge pumps, in which the second charging current is greater than the first charging current. Since one or more charge pumps are used to control charging of the battery throughout the charging process, the efficiency advantage of the charge pumps is fully utilized, and the charging rate of the terminal apparatus can be fully improved.

FIG. 8 is a block diagram of a device 80 for charging a terminal apparatus according to another embodiment of the present invention.

The terminal apparatus includes a battery and a plurality of charge pumps.

As shown in FIG. 8, the device 80 for charging the terminal apparatus includes: an acquisition module 801 configured to obtain a cut-off voltage for charging the battery and a cut-off current for charging the battery and to obtain a current battery voltage of the battery, in response to supplying power to the battery by the plurality of charge pumps collectively; a third control module 802 configured to reduce by a fourth number the number of charge pumps according to a second charging current, the current battery voltage, and the cut-off voltage, in which the second charging current is a charging current collectively provided by the plurality of charge pumps for the battery; and a fourth control module 803 configured to control remaining charge pumps after reduction to provide a fourth charging current to the battery until a current difference between the fourth charging current and the cut-off current is less than or equal to a current difference threshold value, and to stop control over the provision of the fourth charging current to the battery by the remaining charge pumps after reduction, in which the fourth charging current is less than the second charging current.

In this embodiment, when the plurality of charge pumps provide the battery with power collectively, the cut-off voltage and the cut-off current both for charging the battery are obtained, and the current battery voltage of the battery is obtained. In addition, the number of charge pumps is reduced by the fourth number according to the second charging current, the current battery voltage and the cut-off voltage, in which the second charging current is the charging current collectively provided by the plurality of charge pumps for the battery. Moreover, the remaining charge pumps after reduction are controlled to provide the fourth charging current to the battery until the current difference between the fourth charging current and the cut-off current is less than or equal to the current difference threshold value. The control over the provision of the fourth charging current to the battery by the remaining charge pumps after reduction is stopped, in which the fourth charging current is less than the second charging current. Therefore, the charging rate of the terminal apparatus can be fully improved, the charging safety can be effectively guaranteed, the battery loss can be avoided, and the battery life can be improved.

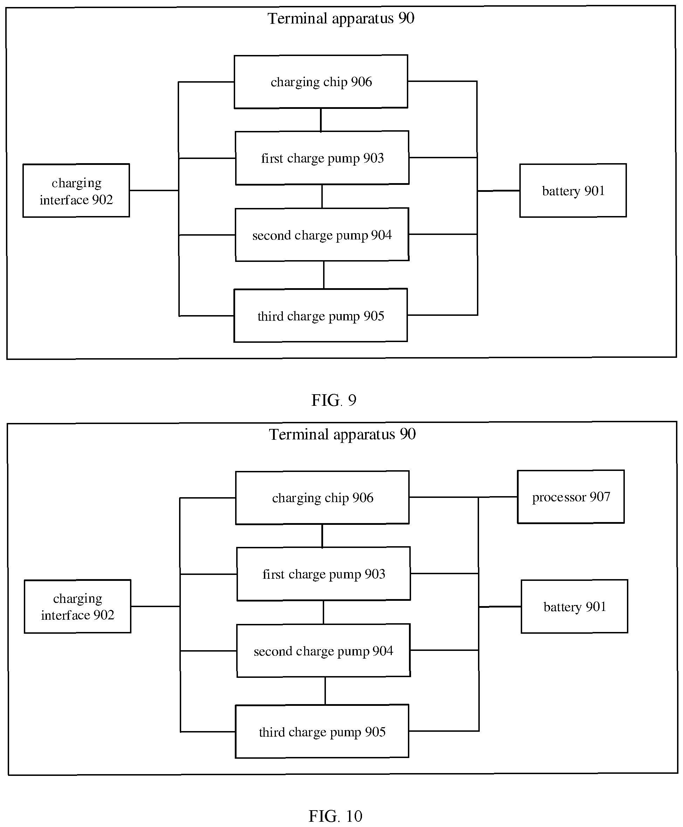

FIG. 9 is a block diagram of a terminal apparatus 90 according to an embodiment of the present invention.

As shown in FIG. 9, the terminal apparatus 90 includes: a battery 901; a charging interface 902; a first charge pump 903, a second charge pump 904, and a third charge pump 905 coupled in parallel to each other; and a charging chip 906 coupled in parallel to the first charge pump 903. A first end of the first charge pump 903, a first end of the second charge pump 904, and a first end of the third charge pump 905 are coupled to the charging interface 902; and a second end of the first charge pump 903, a second end of the second charge pump 904, and a second end of the third charge pump 905 are coupled to the battery 901. The first charge pump 903, the second charge pump 904, and the third charge pump 905 are configured to perform fast charging of the battery 901. A first end of the charging chip 906 is coupled to the charging interface 902, a second end of the charging chip 906 is coupled to the battery 901, and the charging chip 906 is configured to charge the battery 901.

FIG. 10 is a block diagram of the terminal apparatus 90 according to another embodiment of the present invention, in which the terminal apparatus 90 further includes: a processor 907, configured to control a first number of charge pumps to provide a first charging current to the battery 901, and configured to add a second number of charge pumps according to the first charging current to collectively provide a second charging current to the battery 901 until the number of the charge pumps supplying power to the battery 901 reaches a total number of the plurality of charge pumps, in which the second charging current is greater than the first charging current.

In the example in FIG. 10, the first number of charge pumps may be any one or two charge pumps of the first charge pump 903, the second charge pump 904 and the third charge pump 905, which is not limited in the present invention. By adding the second number of charge pumps means that, in addition to the first number of charge pumps, one or two charge pumps from the first charge pump 903, the second charge pump 904 and the third charge pump 905 may be started in addition to the first number of charge pumps, which is not limited in the present invention.

The processor 907 is configured to control the charging chip 906, the first charge pump 903, the second charge pump 904 and the third charge pump 905 to provide a charging current to the battery 901 in response to supporting a preset charging protocol, or configured to control the charging chip 906 to provide the charging current to the battery 901 in response to not supporting the preset charging protocol.

In this embodiment, the first number of charge pumps are controlled to provide the first charging current to the battery; and the second number of charge pumps is added according to the first charging current to collectively provide the second charging current to the battery until the number of the charge pumps supplying power to the battery reaches the total number of the plurality of charge pumps, in which the second charging current is greater than the first charging current. Since one or more charge pumps are used to control charging of the battery throughout the charging process, the efficiency advantage of the charge pumps is fully utilized, and the charging rate of the terminal apparatus can be fully improved. The charging chip, the first charge pump, the second charge pump and the third charge pump are controlled to provide the charging current to the battery in response to supporting the preset charging protocol, or the charging chip is controlled to provide the charging current to the battery in response to not supporting the preset charging protocol, so that the charging flexibility of the terminal apparatus may be effectively improved, and it is effectively applicable to personalized charging scenarios.

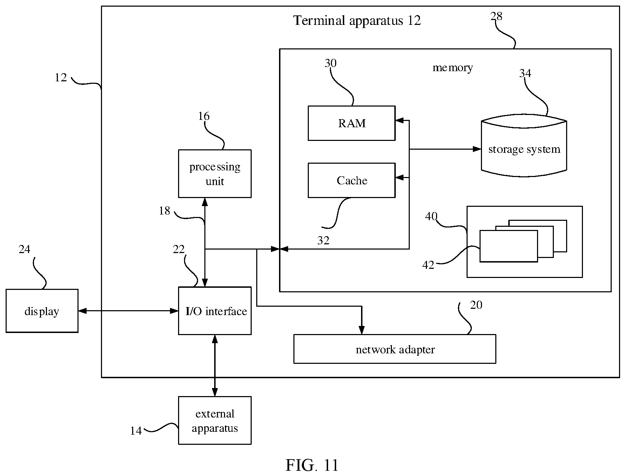

FIG. 11 shows a block diagram of a terminal apparatus 12 according to an embodiment of the present invention. The terminal apparatus 12 shown in FIG. 11 is merely exemplary and should not impose any limitations on the functions and usage scope of the embodiments of the present invention.

As shown in FIG. 11, the terminal apparatus 12 is represented in the form of a universal computing device. Components of the terminal apparatus 12 may include, but are not limited to, one or more processors or processing units 16, a system memory 28, and a bus 18 coupling different system components (including the system memory 28 and the processing unit 16).

The bus 18 represents one or more types of several bus structures, and includes a memory bus or a memory controller, a peripheral bus, a graphics acceleration port, a processor, or a local bus using any bus structure in a variety of bus structures. For example, these architectures include but are not limited to an industry standard architecture (hereinafter referred to as ISA) bus, a micro channel architecture (hereinafter referred to as MAC) bus, an enhanced ISA bus, a video electronics standards association (hereinafter referred to as VESA) local bus and a peripheral component interconnection (hereinafter referred to as PCI) bus.

The terminal apparatus 12 typically includes a variety of computer system readable media. These media may be any available media that may be accessed by the terminal apparatus 12, and include a volatile medium, a non-volatile medium, a removable medium and a non-removable medium.

The memory 28 may include a computer system readable medium in the form of a volatile memory, such as a random access memory (hereinafter referred to as RAM) 30 and/or a cache memory 32. The terminal apparatus 12 may further include other removable/non-removable, volatile/non-volatile computer system storage media. As an example, a storage system 34 may be used to read and write a non-removable, non-volatile magnetic medium (not shown in FIG. 11, generally referred to as "a hard disk drive").

Although not shown in FIG. 11, a disk drive for reading and writing a removable non-volatile disk (such as "a floppy disk"), and an optical disc drive for reading and writing a removable non-volatile disc (such as a compact disc read only memory (hereinafter referred to as CD-ROM), a digital video disc read only memory (hereinafter referred to as DVD-ROM) or other optical media) may be provided. In these cases, each drive may be coupled to the bus 18 through one or more data medium interfaces. The memory 28 may include at least one program product having a set (e.g., at least one) of program modules configured to perform functions of various embodiments of the present invention.

A program/utility 40 having a set (at least one) of program modules 42 may be stored in, for example, the memory 28. Such program modules 42 include, but are not limited to, an operating system, one or more applications, and other program modules and program data. Each or some combination of these examples may include an implementation of a network environment. The program module 42 generally performs a function and/or a method in embodiments described in the present invention.

The terminal apparatus 12 may further be in communication with one or more external apparatuses 14 (such as a keyboard, a pointing device, a display 24, etc.), one or more apparatuses that enable a human body to interact with the terminal apparatus 12, and/or any apparatus (such as a network card, a modem, etc.) that enables the terminal apparatus 12 to communicate with one or more other computing apparatuses. This communication may be performed via an input/output (I/O) interface 22. In addition, the terminal apparatus 12 may further be in communication with one or more networks (such as a local area network (hereinafter referred to as LAN), a wide area network (hereinafter referred to as WAN) and/or a public network (such as the Internet) through a network adapter 20. As shown in the figure, the network adapter 20 is in communication with other modules of the terminal apparatus 12 through the bus 18. It should be understood that although not shown in the figure, other hardware modules and/or software modules may be used in combination with the terminal apparatus 12, and include but not are limited to microcode, device drivers, redundant processing units, external disk drive arrays, RAID systems, tape drives, data backup storage systems, etc.

The processing unit 16 executes various functional applications and data processing by running a program stored in the system memory 28, and the functional application may be, for example, to realize the method for charging the terminal apparatus mentioned in the preceding embodiments.

The present invention further provides a non-transitory computer-readable storage medium storing a computer program. The method for charging the terminal apparatus according to the previous embodiments of the present invention is implemented when the program is executed by the processor.

The present invention further provides a computer program product. The method for charging the terminal apparatus according to the previous embodiments of the present invention is implemented when instructions in the computer program product are executed by the processor.

It should be noted that in the description of the present invention, terms "first" and "second", etc. are only used for descriptive purposes and cannot be understood as indicating or implying relative importance. In addition, in the description of the present invention, "a plurality of' means two or more, unless otherwise specifically defined.

Any process or method description in the flowchart or otherwise described herein may be understood as representing a module, segment or part of code that includes one or more executable instructions for implementing the steps of a particular logical function or process, and the scope of the embodiments of the present invention includes additional implementations, which may not be in the order shown or discussed. It should be understood by those skilled in the art that in embodiments of the present invention functions may be performed in a substantially simultaneous manner or in reverse order according to the functions involved.

It should be understood that the various parts of the present invention may be implemented in hardware, software, firmware, or a combination thereof. In the above embodiments, a plurality of steps or methods may be implemented with software or firmware stored in memory and executed by a suitable instruction execution system. For example, when it is implemented by hardware, as in another embodiment, it can be implemented by any one of the following technologies known in the art or their combination: a discrete logic circuit with a logic gate circuit for realizing a logic function on a data signal, a special integrated circuit with a suitable combined logic gate circuit, a programmable gate array (PGA), a field programmable gate array (FPGA), etc.

Those skilled in the art can understand that all or part of the steps carried by the method of implementing the above embodiments can be implemented by instructing relevant hardware through a program. The program can be stored in a computer-readable storage medium. When the program is executed, it includes one of or a combination of the steps of the method embodiment.

In addition, each functional unit in each embodiment of the present invention can be integrated in a processing module; or each unit can exist physically independently; or two or more units can be integrated in a module. The above integrated modules can be implemented in the form of hardware or software function modules. When the integrated module is realized in the form of a software functional module and is sold or used as an independent product, it can also be stored in a computer readable storage medium.

The storage medium mentioned above can be a read-only memory, a disk or an optical disc.

Reference throughout this specification to "an embodiment," "some embodiments," "an example," "a specific example," or "some examples," means that a particular feature, structure, material, or characteristic described in connection with the embodiment or example is included in at least one embodiment or example of the present invention. Thus, the exemplary descriptions of the above terms throughout this specification are not necessarily referring to the same embodiment or example. Moreover the particular features, structures, materials or characteristic described may be combined in a suitable manner in any one or more embodiments or examples.

Although the embodiments of the present invention have been shown and described above, it can be understood that the above embodiments are exemplary and cannot be understood as limitations on the present invention, and changes, modifications, alternatives and variations can be made in the above embodiments within the scope of the present invention by those skilled in the art.

## Claims

1. A method for charging a terminal apparatus comprising a battery and a plurality of charge pumps, the method comprising:
controlling a first number of charge pumps to provide a first charging current to the battery (S101, S301, S401); and
adding a second number of charge pumps according to the first charging current to collectively provide a second charging current to the battery, until a number of charge pumps supplying power to the battery reaches a total number of the plurality of charge pumps, wherein the second charging current is greater than the first charging current (S102, S302).

2. The method according to claim 1, wherein adding the second number of charge pumps according to the first charging current to collectively provide the second charging current to the battery (S102, S302) comprises:
adding the second number of charge pumps to collectively provide the second charging current to the battery in response to the first charging current being greater than a first current threshold value (S402); and
continuously using the first number of charge pumps to provide the first charging current to the battery in response to the first charging current being less than or equal to the first current threshold value (S403).

3. The method according to claim 2, wherein:
the first number of charge pumps provide the first charging current to the battery based on a first input voltage and a first input current provided by an external charging device; and
after continuously using the first number of charge pumps to provide the first charging current to the battery (S403), the method further comprises:
regulating the first input voltage to obtain a second input voltage, the second input voltage being greater than the first input voltage (S404);
regulating the first input current to obtain a second input current, the second input current being greater than the first input current (S405); and
controlling the first number of charge pumps to provide the first charging current to the battery based on the second input voltage and the second input current, until the first charging current is greater than the first current threshold value (S406).

4. The method according to claim 1, wherein after adding the second number of charge pumps according to the first charging current to collectively provide the second charging current to the battery (S102, S302), the method further comprises:
adding a third number of charge pumps according to the second charging current to collectively provide a third charging current to the battery until the number of the charge pumps supplying power to the battery reaches the total number of the plurality of charge pumps, in response to the number of the charge pumps supplying power to the battery not reaching the total number of the plurality of charge pumps, wherein the third charging current is greater than the second charging current (S410).

5. The method according to claim 4, wherein adding the third number of charge pumps according to the second charging current to collectively provide the third charging current to the battery (S410) comprises:
adding the third number of charge pumps to collectively provide the third charging current to the battery, in response to the second charging current being greater than a second current threshold value; and
continuously using the first number of charge pumps and the second number of charge pumps to collectively provide the second charging current to the battery, in response to the second charging current being less than or equal to the second current threshold value.

6. The method according to claim 1, wherein after adding the second number of charge pumps according to the first charging current to collectively provide the second charging current to the battery (S102, S302), the method further comprises:
obtaining a cut-off voltage for charging the battery and a cut-off current for charging the battery and obtaining a current battery voltage of the battery, in response to the number of the charge pumps supplying power to the battery reaching the total number of the plurality of charge pumps (S303, S407);
reducing by a fourth number the number of charge pumps according to the second charging current, the current battery voltage, and the cut-off voltage (S304, S408); and
controlling remaining charge pumps after reduction to provide a fourth charging current to the battery until a current difference between the fourth charging current and the cut-off current is less than or equal to a current difference threshold value, and stopping control over the provision of the fourth charging current to the battery by the remaining charge pumps after reduction, wherein the fourth charging current is less than the second charging current (S305, S409).

7. The method according to claim 6, wherein reducing the number of charge pumps by the fourth number according to the second charging current, the current battery voltage and the cut-off voltage (S304, S408) comprises:
determining a voltage difference between the cut-off voltage and the current battery voltage; and
reducing the number of charge pumps by the fourth number according to the second charging current and the voltage difference.

8. The method according to claim 7, wherein reducing the number of charge pumps by the fourth number according to the second charging current and the voltage difference comprises:
regulating the second charging current to obtain a fifth charging current and reducing the number of charge pumps by the fourth number according to the fifth charging current, in response to the voltage difference being greater than or equal to a voltage difference threshold value, wherein the fifth charging current is less than the second charging current; and
updating the current battery voltage of the battery, and updating the voltage difference according to the updated current battery voltage until the updated voltage difference is greater than or equal to the voltage difference threshold value, in response to the voltage difference being less than the voltage difference threshold value.

9. The method according to claim 8, wherein reducing the number of charge pumps by the fourth number according to the fifth charging current comprises:
reducing by the fourth number the number of charge pumps, in response to the fifth charging current being less than or equal to a third current threshold value; and
regulating the fifth charging current until a regulated fifth charging current is less than or equal to the third current threshold value, in response to the fifth charging current being greater than the third current threshold value.

10. The method according to claim 8 or 9, wherein a redundancy is set between the current battery voltage and the cut-off voltage, and is configured as the voltage difference threshold value.

11. The method according to claim 2 or 3, wherein the first current threshold value is a minimum current that allows the charge pumps to work.

12. A terminal apparatus (90), comprising:
a battery (901);
a charging interface (902);
a first charge pump (903), a second charge pump (904), and a third charge pump (905) coupled in parallel, wherein a first end of the first charge pump (903), a first end of the second charge pump (904), and a first end of the third charge pump (905) are coupled to the charging interface (902); a second end of the first charge pump (903), a second end of the second charge pump (904), and a second end of the third charge pump (905) are coupled to the battery (901); and the first charge pump (903), the second charge pump (904), and the third charge pump (905) are configured to perform fast charging of the battery (901); and
a charging chip (906) coupled in parallel to the first charge pump (903), wherein a first end of the charging chip (906) is coupled to the charging interface (902), a second end of the charging chip (906) is coupled to the battery (901), and the charging chip (906) is configured to charge the battery (901).

13. The terminal apparatus according to claim 12, further comprising:
a processor (907) configured to implement the method according to any one of claims 1 to 11.

14. A non-transitory computer-readable storage medium having stored therein an instruction that, when executed by a processor, causes the processor to perform the method according to any one of claims 1 to 11.

15. A computer program product, comprising a computer program, wherein the method according to any one of claims 1 to 11 is implemented in response to executing the computer program by a processor.
